# EUROPEAN PATENT APPLICATION

(11) **EP 4 454 852 A1**
(43) Date of publication of application: **30.10.2024**
(21) Application number: 23170528.6
(22) Date of filing: 28.04.2023
(51) Int. Cl.: B29C 33/12, B29D 99/00, B29B 11/16, B29C 33/30, B29C 33/40, B29C 33/48, B29C 33/56, B29C 65/70, B29C 70/30, B29C 70/86, F03D 1/06, B29B 11/04, B29L 31/08

(54) **PACKING TABLE FOR MANUFACTURING OF A JOINING ADAPTER TO BE USED IN A METHOD FOR JOINING AN OUTBOARD BLADE SECTION TO AN INBOARD BLADE SECTION OF A LONGITUDINALLY SPLIT WIND TURBINE BLADE AND METHOD FOR MANUFACTURING OF A JOINING ADAPTER**

(71) Applicant: Siemens Gamesa Renewable Energy A/S, 7330 Brande (DK)
(72) Inventor: Chiesura, Gabriele, 9000 Aalborg (DK); Russek, Simon Vestphael, 9270 Klarup (DK)
(74) Representative: SGRE-Association

(57) **Abstract**

The packing table (1) comprises a three dimensionally shaped material layup surface (11) having a shape that corresponds to an inner contour of respective joining interfaces (311,321) of the blade sections (31,32) to be joined and has a center plane (C) oriented normally with respect to a longitudinal axis (L) of the wind turbine blade, wherein an axial position of the center plane (C) corresponds to a center of the joining zone (3). The shape of an inboard portion (111) of the material layup surface (11) corresponds with an inner contour of the joining interface (311) of the inboard blade section (31) and the shape of an outboard portion (112) of the material layup surface (11) corresponds with an inner contour of the joining interface (321) of the outboard blade section (32).

The packing table (1) according to the invention allows to provide a process optimization in the manufacturing of a joining adapter (2) and thus facilitates the joining of blade sections (31,32) of longitudinally split wind turbine blades.

## Description

The present invention relates to a packing table for manufacturing of a joining adapter to be used in a method for joining an outboard blade section to an inboard blade section of a longitudinally split wind turbine blade and to a method for manufacturing of a joining adapter.

Wind turbine blades, especially for offshore use, continuously increase in size with the evolvement of technology. Regarding the main dimensions current blades can reach a root diameter of approximately 6m, a blade length of over 100 m while typical chord lengths can reach up to 8 m.

As the dimensions of wind turbine blades are growing rapidly with the evolvement of technology, the production of wind turbine blades often requires pre-manufacturing of blade sections that are joined together in subsequent production steps. These blades are commonly called "modular blades" or "split blades". Wind turbine blades manufactured according to this approach can be split at certain span locations so that the finished blade comprises at least two blade sections.

WO 2020/244902 A1 discloses a method for manufacturing a wind turbine blade from at least two longitudinally split blade sections. To connect the two blade sections a joining adapter comprising a fiber layup is arranged inside the two blade sections between joining interfaces on either side so that it overlaps at least partially with both the first and the second blade section. In the region of their joining interfaces the blade sections are tapered on the inside, wherein the joining adapter is correspondingly tapered on the outside to mate with the inside tapered joining interfaces of the blade sections. In a subsequent step, the joining region is tightly sealed with vacuum bags both on the outside and the inside of the blade and the joining region is evacuated. Subsequently, a resin system is injected into the evacuated joining region. The resin system penetrates into the fiber structure of the fiber layup of the joining adapter and to adjacent fibers at the joining interfaces of both blade sections. The resin system then cures under an exothermic reaction.

WO 2021/073842 A1 discloses another method for assembling blade parts of a wind turbine blade, wherein the method includes a customization and/or custom selection of a suitable joining adapter based on the individual geometry of the joining interfaces of the first and second blade sections.

In both above-described production processes according to the prior art there is a need for a precisely manufactured joining adapter which has an outer contour that matches an inner contour of the joining interfaces of the adjacent blade sections to be joined as closely as possible.

However, the manufacturing of the joining adapter is not addressed in the prior art in detail.

Due to the increasing demand in wind energy production capacity it is crucial to establish production processes that are as efficient as possible and allow for a consistently high quality level and reproducibility. While other process steps of the manufacturing of wind turbine blades have already been optimized under these aspects the manufacturing of the joining adapter still exhibits potential for improvement.

Therefore, it is one object of the present invention to provide a packing table for manufacturing of a joining adapter to be used in a method for joining an outboard blade section to an inboard blade section of a longitudinally split wind turbine blade in a joining zone.

It is an additional object of the invention to provide a method for manufacturing of a joining adapter to be used in a method for joining an outboard blade section to an in-board blade section of a longitudinally split wind turbine blade in a joining zone.

Accordingly, according to a first aspect of the invention a packing table for manufacturing of a joining adapter to be used in a method for joining an outboard blade section to an inboard blade section of a longitudinally split wind turbine blade in a joining zone is provided.

The packing table comprises:
- A three dimensionally shaped material layup surface having a shape that corresponds to an inner contour of respective joining interfaces of the blade sections to be joined,
- a center plane oriented normally with respect to a longitudinal axis of the wind turbine blade, wherein an axial position of the center plane corresponds to a center of the joining zone,
- wherein the shape of an inboard portion of the material layup surface corresponds with an inner contour of the joining interface of the inboard blade section and wherein the shape of an outboard portion of the material layup surface corresponds with an inner contour of the joining interface of the outboard blade section.

The dimensions - in particular its length - of the packing table in particular equal the dimensions of the joining adapter to be produced with it. For example a total length of the packing table can reach up to 11m and a total width can reach up to 6m. The packing table can be understood as a kind of lower mold as the shape of its material layup surface corresponds with the outer contour of the joining adapter to be produced with it. However the packing table is not a mold in the literal sense as it is not used for infusing the material layup provided on it with a curable resin. Preferably the material layup placed on top of the material layup surface is an exclusively dry material layup that is only cast, respectively infused with a curable resin, when the joining adapter is used in the method for joining an outboard blade section to an in-board blade section of a longitudinally split wind turbine blade in a joining zone.

With regards to the method for joining an outboard blade section to an in-board blade section of a longitudinally split wind turbine blade in a joining zone it is referred to WO 2020/244902 A1, in particular page 2, line 10 - page 11, line 16, and page 14, line 10 - page 22, line 11, which is hereby incorporated by reference.

A typical wind turbine blade comprises two or more blade sections dividing the blade in a lengthwise direction. A first one of the blade sections is an inboard blade section. The inboard blade section comprises, for example, a root section connectable to the hub of the rotor. A second one of the blade sections is an outboard blade section. The outboard blade section comprises, for example, a blade tip. In addition to the described two blade sections, the wind turbine blade may also comprise one or more further blade sections. Thus, "longitudinally split" means that the wind turbine blade is split at a certain spanwise location.

Apart from the (mostly cylindrical) root section connectable with the hub, a typical wind turbine blade is formed aerodynamically. The wind turbine blade, i.e. each of its blade sections, comprises a pressure side (upwind side) and a suction side (downwind side). The pressure side and the suction side may be connected with each other at a leading edge and a trailing edge. The pressure and suction sides and the leading and trailing edges define an interior cavity of the wind turbine blade.

The main dimensions of the wind turbine blade - profile thickness and chord length - decrease from hub to tip; or in other words: A typical wind turbine blade narrows from in-board to outboard. Therefore the inboard and outboard blade sections are not cylindrical in the joining zone but frusto-conical.

In embodiments the material layup surface may comprise at least two tapering sections with the center plane in between, wherein the tapering sections taper axially outwardly from the center plane in opposing axial directions. Herein a first tapering section is arranged in the inboard portion of the material layup surface and a second tapering portion is arranged in the outboard portion of the material layup surface.

The at least two tapering sections of the material layup surface correspond to inversely tapering sections of the blade sections to be joined with the joining adapter. In particular the inboard and the outboard blade section to be joined with the joining adapter comprise outwardly tapered portions such that their outwardly tapered portions form an inner recess in that the joining adapter can be arranged. In other words, the tapering section of the inboard portion of the material layup surface of the packing table corresponds to an inversely tapered section of the inboard blade section and the tapering section of the outboard portion of the material layup surface of the packing table corresponds to an inversely tapered section of the outboard blade section.

The term "tapering" is to be understood relatively to the intended final contour of the wind turbine blade on its inner side. Given that the wind turbine blade - as well as its in-board and outboard blade sections - decreases both in thickness and chord length from hub to tip, a structure that tapers relatively to the intended final contour of the wind turbine blade on its inner side may not be tapering when compared to an imaginary cylinder shell. "Tapering" therefore in particular has the meaning of tapering relatively to the frusto-conical shape of the inboard and outboard blade sections in the joining zone.

When manufacturing the joining adapter using the packing table according to the invention the (lower) material layup provided thereon will have its highest thickness axially around the center plane. In opposing axial directions facing away from the center plane the material thickness gradually decreases and will finally come down to only a single digit of layers at the terminal axial ends of the packing table.

The joining adapter that can be produced with the packing table according to the invention is explicitly adapted to connect the inboard and the outboard blade section from the inside. Joining longitudinally split blade sections from the inside under use of correspondingly tapering sections on the inside of the blade sections has the specific advantage that the outer surfaces of the blade sections can be finished prior to the joining process. In particular, there is no need for additional filling, coating and/or painting of the outer surface of the blade after the joining process.

According to a further embodiment the packing table may comprise at least one groove in the material layup surface. In particular the at least one groove can extend in a circumferential direction. The at least one groove is adapted to receive a tensioning strap. A circumferential direction in particular is a direction that extends in a plane oriented normally with respect to the longitudinal axis of the wind turbine blade. In embodiments it is also possible that the groove extends with a certain axial component, for example following a helical path.

The at least one groove serves as a receiving space for a tensioning strap to be arranged therein during production of the joining adapter. In particular the tensioning strap is arranged in the groove as the very first step of a method for manufacturing of a joining adapter using the packing table according to the invention, i.e. already before the material layup starts.

The at least one groove has a predefined depth that can be 3mm - 15mm, in particular 4mm -10mm. A width of the at least one groove can range from 30mm to 100mm, in particular from 40mm to 80mm, depending on the type and load rating of the tensioning strap used in the manufacturing method.

The tensioning strap is in particular used to secure a lower material layup provided on the material layup surface of the packing table and an upper layup provided on a mandrel against the mandrel. This has the advantage, that the prepacked material layup of the joining adapter can be removed from the packing table together with the mandrel without risking a dislocation and/or loss of components of the material layup.

According to another embodiment, the packing table may comprise multiple grooves in the material layup surface, in particular extending in a circumferential direction. The multiple grooves can be provided with a predefined axial spacing there between and are each adapted to receive a tensioning strap. Providing more than one groove allows for a more equal force distribution over the length of the joining adapter to be produced with the packing table of the invention and further reduces the risk of unintentional dislocation and/or loss of components of the material layup.

In embodiments the axial spacing between neighboring grooves can be 300mm - 700mm, in particular 400mm - 600mm. The optimum spacing depends on the type and load rating of the straps on the one hand and on the other hand on the mechanical properties of the material layup, e.g. the type and amount of fiber mats used therein, the type and amount of core materials, the thickness of the material layup and whether the material layup if provided in dry or pre-cast form.

In embodiments the packing table may comprise a plastic material, in particular a closed cell foam, in particular an expanded polystyrene. The plastic material provides the three dimensionally shaped material layup surface. In particular the plastic material can be coated with a relatively harder surface coating, in particular comprising a polyurethane.

A plastic material, in particular a closed cell foam like expanded polystyrene, has the advantage that it can be three dimensionally formed very easily and quickly. The three dimensional forming can either be done manually, e.g. by means of a hot wire cutter, or by machining with CNC-machinery. The downside to said materials however is their relatively poor mechanical stability, in particular the low hardness. Therefore it is beneficial to provide a relatively harder coating layer on top so that the material layup surface of the packing table obtains a higher durability, in particular against abrasion. The relatively harder surface coating can be in particular applied by means of spray coating.

Above named materials are to be understood explicitly as examples only. In embodiments the packing table can comprise or be made of other materials as well, e.g. certain metals, in particular steel.

In yet another embodiment the packing table can comprise at least two sidewalls forming a half-pipe shaped portion of the material layup surface. In particular the half-pipe shaped portion of the material layup surface is located both in the inboard and the outboard portion of the material layup surface and neighbors the center plane.

In embodiments the sidewalls do not extend along the entire length of the packing table but only axially around the center plane. It is possible that opposing axial end sections of the packing table are sidewall-free. In other words, the axial end sections of the packing table may exhibit a material layup surface that is essentially flat.

According to yet another embodiment of the packing table the shape of the material layup surface may correspond to an inner contour of a portion of the respective joining sections of the blade sections to be joined that are associated with a suction side of the wind turbine blade. In other words, the lower material layup of the joining adapter that is done on the packing table according to the invention relates to a suction side of the wind turbine blade, whereas the upper material layup of the joining adapter that is done on the mandrel relates to a pressure side of the wind turbine blade.

In another embodiment the packing table may comprise a multitude of plates stacked in the axial direction, wherein each plate comprises a portion of the material layup surface so that the material layup surface is provided by a totality of stacked plates. The thickness of the plates may be between 0,2 and 1,5 m, preferably between 0,3 and 0,8 m. This is to say, the packing table may have a modular design what is advantageous as it renders the three dimensional shaping of the material layup surface easier as the individual plates with a limited thickness can be processed with less effort.

According to another aspect of the invention a method for manufacturing of a joining adapter to be used in a method for joining an outboard blade section to an inboard blade section of a longitudinally split wind turbine blade in a joining zone, using a packing table according to the invention, is proposed.

The method comprises the steps of:
a) placing a predefined number of fiber mats on the material layup surface of the packing table to create a lower material layup;
b)covering the lower material layup with at least one vacuum bag;
c) arranging at least one mandrel on the packing table on top of the lower material layup covered with the at least one vacuum bag;
d) covering an upper side of the mandrel with a least one vacuum bag;
e) placing a predefined number of fiber mats on the mandrel covered with the at least one vacuum bag to create an upper material layup;
f) securing the lower and upper material layup against the mandrel.

By placing the predefined number of fiber mats on the material layup surface of the packing table to create the lower material layup in step a) the final outer contour of the joining adapter is generated. Herein the inboard portion of the material layup surface shapes a portion of the joining adapter that corresponds with an inner contour of the joining interface of the inboard blade section and the outboard portion of the material layup surface shapes a portion of the joining adapter that corresponds with an inner contour of the joining interface of the outboard blade section.

The fiber mats may comprise, for example, glass fibers, carbon fibers, aramid fibers and/or natural fibers.

The upper and lower material layup may form together a shell region of the joining adapter.

The mandrel allows a precise forming of the upper material layup and is of high importance in the method for joining an outboard blade section to an inboard blade section of a longitudinally split wind turbine blade carried out using the joining adapter as it supports the joining adapter during the infusion with resin and during curing so that the mandrel acts as an inner mold.

In another embodiment of the method the at least one mandrel can be an expandable mandrel that is expandable at least in the radial direction, wherein the expandable mandrel is arranged on the packing table in a non-expanded condition in step c).

The expandable mandrel can comprise suitable mechanical, hydraulic, pneumatic and/or electrical means that allow for a variation of at least one measure in the radial direction. For example it is possible that a cross section of the mandrel can be varied by actuators that change the height and/or the width of the mandrel. The mandrel might comprise multiple segments that are relatively moveable to achieve said variation of its cross section. Between at least two mandrel segments there might be at least one gap, in particular extending in the longitudinal direction. When placing the fiber mats on the mandrel it may be especially beneficial if the fiber mats have a certain excess length to compensate for a later expansion of the mandrel. This excess material can be provided in said gap and form a fold therein.

The use of an expandable mandrel has the specific advantage that the joining adapter can be produced on the packing table with a smaller diameter than the diameter of the joining interfaces of the inboard and outboard blade sections to be joined so that it can be easier inserted thereto as there is a larger radial gap available. As soon as the joining adapter is located in its final joining position inside of the blade sections to be joined the expandable mandrel is expanded so that the upper and lower material layup of the joining adapter abut against the respective joining interfaces of the blade sections to be joined.

According to a further embodiment of the method in step c) two separate mandrels are arranged on the packing table, wherein in particular a first mandrel is associated with a leading edge side of the wind turbine blade and a second mandrel is associated with a trailing edge side of the wind turbine blade. Both mandrels can be expandable mandrels in particular. Between the two mandrels there might be a gap that is adapted to receive a portion of a shear web.

In a further embodiment the method may comprise step b1) arranging a shear web on the lower material layup and connecting it to the lower material layup with a first web joint, and further step e1) connecting the shear web to the upper material layup with a second web joint.
Step b1) can be in particular executed after step a) and before step b) and step e1) can be in particular executed after or during step e) and before step f).

A shear web is a component of a wind turbine blade that connects the blade shells of the pressure side and the suction side in the interior cavity of the blade and provides shear strength to the blade. The joining adapter produced with the method according to the invention can comprise a portion of a shear web that complements the shear webs of the blade portions to be joined in the joining zone.

The lower and/or the upper material layup may comprise fibers in dry condition. Alternatively or additionally the shear web, the first web joint and/or the second web joint may comprise fibers in a pre-cast condition. The dry fibers of the lower and/or upper material layup - in particular in the shell region of the joining adapter - are infused with a curable resin in the method for joining an outboard blade section to an inboard blade section of a longitudinally split wind turbine blade in which the joining adapter is to be used.

According to yet a further embodiment of the method step a) and/or step e) may comprise placing at least one layer of a core material between the fiber mats.

Suitable core materials include low density foams and/or balsa wood. The core material allows to reduce the weight of the final fiber-reinforced resin laminate while maintaining a sufficient rigidity and/or strength of the joining adapter as soon it is in place between the two blade sections to be joined with it.

Finally, a further embodiment of the method may comprise before step a) a step a1) arranging at least one tensioning strap in the at least one groove of the packing table. Additionally step f) may comprise extending the at least one tensioning strap over the upper material layup provided on the mandrel, connecting free ends of the tensioning strap and tensioning the tensioning strap to secure the lower and upper material layup against the mandrel.

By strapping the upper and lower material layup to the mandrel, the material layup can be secured to the mandrel when lifting the mandrel with the fiber layup fixed to it from the packing table and while arranging the mandrel inside the blade sections to be joined.

The embodiments and features described with reference to the apparatus of the present invention apply mutatis mutandis to the method of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an isometric view of the packing table;
Fig. 2 shows a longitudinal sectional view of the packing table;
Fig. 3 shows a longitudinal sectional view of a joining adapter;
Fig. 4 shows a longitudinal sectional view of the joining interfaces of two blade sections to be joined;
Fig. 5 shows a longitudinal sectional view of two joined blade sections;
Fig. 6 shows a cross sectional view of the packing table with two mandrels;
Fig. 7 shows a flow chart of a first embodiment of the method according to the invention; and
Fig. 8 shows a flow chart of a second embodiment of the method according to the invention.

In the Figures, like reference numerals designate like or functionally equivalent elements, unless otherwise indicated.

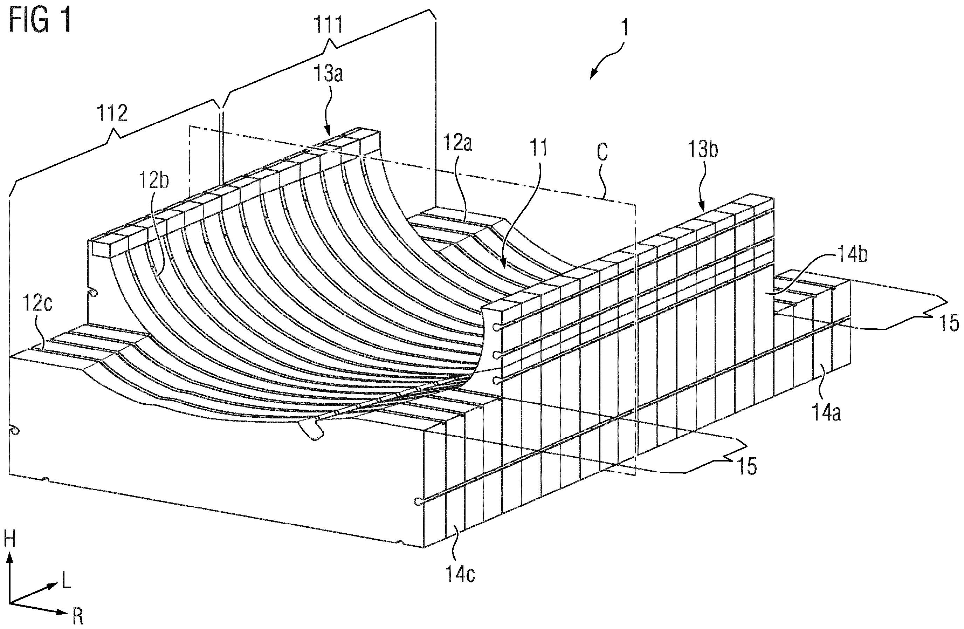

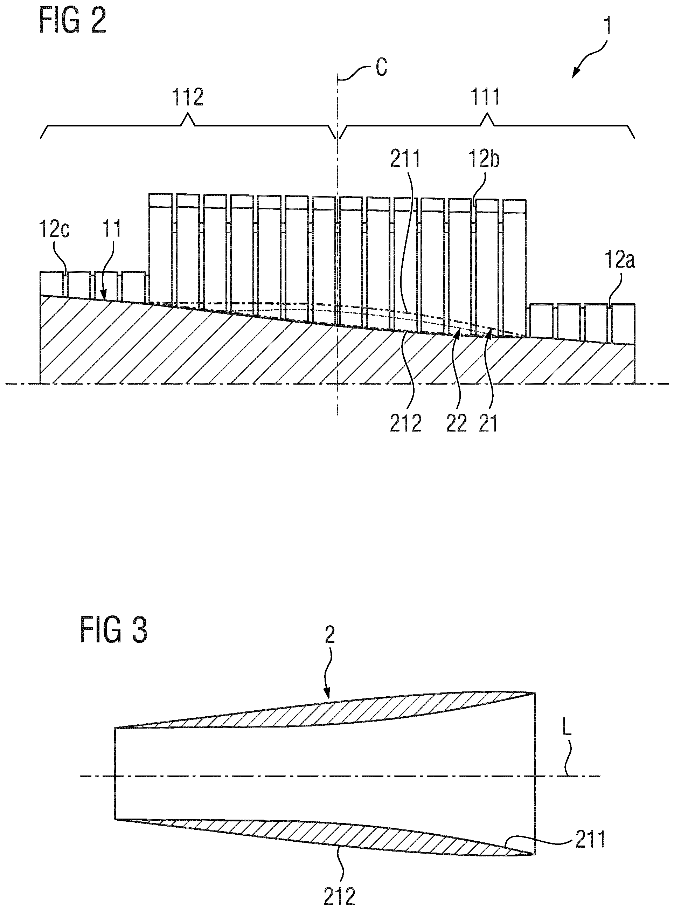

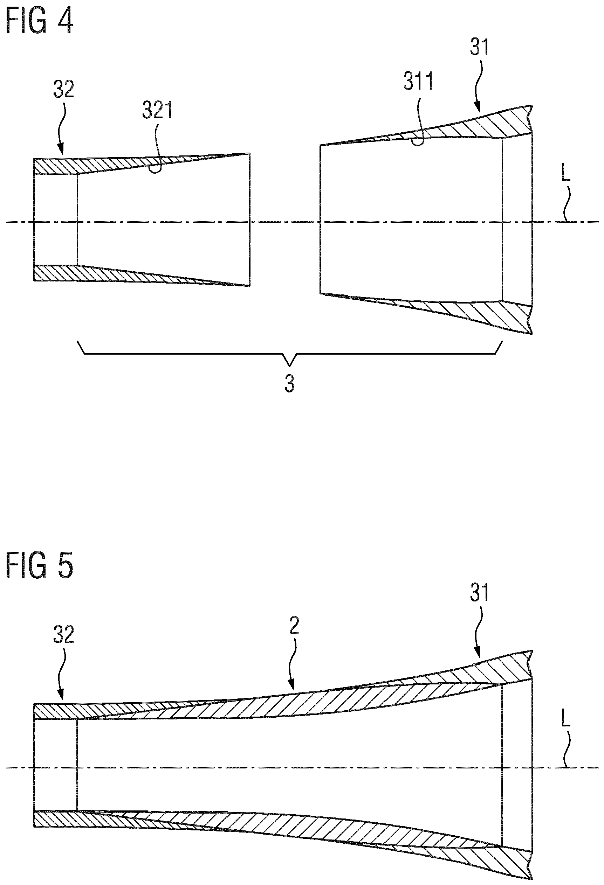

The packing table 1 according to the invention is shown in Fig. 1 in an isometric view. The packing table 1 is adapted for the manufacturing of a joining adapter 2 (see Fig. 3) to be used in a method for joining an outboard blade section 32 to an inboard blade section 31 (see Fig. 4) of a longitudinally split wind turbine blade in a joining zone 3 (see Fig. 4).

The packing table 1 comprises a three dimensionally shaped material layup surface 11 that has a shape that corresponds to an inner contour of respective joining interfaces 311,321 of the blade sections 31,32 to be joined (see Fig. 4). The packing table comprises a center plane C oriented normally with respect to a longitudinal axis L. The longitudinal axis of the wind turbine blade L falls together with the axial direction L of the packing table 1. The center plane C corresponds to a center of the joining zone 3 in that the two blade sections 31,32 are joined together (see Fig. 4, 5).

The shape of an inboard portion 111 of the material layup surface 11 corresponds with an inner contour of the joining interface 311 of the inboard blade section 31 and the shape of an outboard portion 112 of the material layup surface 11 corresponds with an inner contour of the joining interface 321 of the outboard blade section 32.

The center plane C is located axially between the inboard portion 111 and the outboard portion 112.

The material layup surface 11 of the packing table 1 represents a negative form of the joining interfaces 311,321 of the blade sections 31,32 to be joined with the joining adapter 2.

The packing table 1 comprises a multitude of plates 14a,14b,14c stacked in the axial direction, for example 15-30 plates, in particular 22 plates, wherein each plate 14a,14b,14c comprises a portion of the material layup surface 11 so that the material layup surface 11 is provided by a totality of the stacked plates 14a,14b,14c. This modular design is beneficial as it facilitates the three dimensional machining of the material layup surface 11. The individual plates 14a,14b,14c may be held together by suitable clamping means, for example tie rods, cables or ropes.

During the manufacturing of the joining adapter 2 the packing table 1 acts as a kind of lower mold, however it is not a mold in the strict sense as it is not used for infusing the material layup provided on it with a curable resin. Preferably the material layup placed on top of the material layup surface 11 is a dry material layup that is only cast, respectively infused with a curable resin, when the joining adapter is used in the method for joining an outboard blade section to an in-board blade section of a longitudinally split wind turbine blade in a joining zone. The packing table 1 is an important tool in the production method of a joining adapter 2 as it gives the (lower) material layup a close-to-final shape already before the casting of the material layup inside of the blade sections to be joined.

The packing table 1 has multiple grooves 12a,12b,12c in the material layup surface 11 that extend in a circumferential direction and that are provided with a predefined axial spacing there between. Each of the grooves 12a,12b,12c is adapted to receive a tensioning strap (not shown) therein. During the manufacturing of the joining adapter 2 with the packing table 1 the tensioning straps may be arranged in the grooves 12a,12b,12c as the first step of a method for manufacturing of a joining adapter 2, i.e. already before first layers of the material layup are placed on the material layup surface. The grooves 12a,12b,12c may - for example - be milled into a material of the packing table 1 or provided therein otherwise.

The grooves 12a,12b,12c are in particular provided at axial positions that correspond to the position of separation planes between neighboring plates 14a,14b,14c.

During the manufacturing of the joining adapter 2 with the packing table 1 the tensioning straps (not shown) are used to secure a lower material layup provided on the material layup surface 11 and an upper layup provided on a mandrel against the mandrel.

The packing table 1 and/or the stacked plates 14a,14b,14c comprises a closed cell foam, in particular expanded polystyrene, that provides the three dimensionally shaped material layup surface 11. The plastic material may be in particular coated with a relatively harder surface coating, for example comprising a polyurethane which renders the material layup surface 11 more robust.

Further, the packing table 1 comprises two sidewalls 13a,13b forming a half-pipe shaped portion of the material layup surface 11. The half-pipe shaped portion of the material layup surface 11 is located both in the inboard portion 111 and the outboard portion 112 of the material layup surface 11, wherein the center place C divides the half-pipe shaped portion into an inboard half-pipe and an outboard half-pipe. During the manufacturing of the joining adapter 2 with the packing table 1 layup material, e.g. fiber mats and/or core materials, is laid on top of the half-pipe shaped portion to form a circumferentially closed shell region of the joining adapter 2. Opposing axial end sections 15 of the packing table 1 however are sidewall-free so that the material layup surface 11 is essentially flat there. During the manufacturing of the joining adapter 2 with the packing table 1 the axial end sections 15 are used to create a material layup that corresponds to non-circumferential portions of the joining adapter 2 such as a shear web and/or other reinforcement beams associated with the leading and/or the trailing edge of the wind turbine blade.

Fig. 2 shows a longitudinal sectional view of the packing table 1 along the center axis. On top of the material layup surface 11 the (lower) material layup 21 is shown. Inside of the (lower) material layup 21 at least one layer of core material 22 is provided. The shape of the material layup surface 11 in the outboard portion 112 provides the outer contour 212 of the joining adapter 2 for the joining interface of the outboard blade section. The shape of the material layup surface 11 in the inboard portion 111 provides the outer contour 212 of the joining adapter 2 for the joining interface of the inboard blade section.

The inner contour 211 of the joining adapter 2 complements the inner contour of the inboard and outboard blade sections after joining so that the inner contour 211 of the joining adapter 2 can be understood as to equal to the inner contour of the wind turbine blade in the joining zone 3 (see Fig. 4).

When taking the inner contour 211 of the joining adapter 2 respectively the inner contour of the wind turbine blade in the joining zone 3 as a reference it can be clearly understood that material layup surface 11 comprises at least two tapering sections with the center plane C in between. The tapering sections taper axially outwardly from the center plane C in opposing axial directions so that the thickness of the joining adapter decreases with axial distance from the center plane C. A first tapering section is located in the inboard portion 111 of and a second tapering section is located in the outboard portion 112 so that the joining adapter 2 produced with the packing table 1 comprises two outwardly tapering ends that correspond to inversely tapering sections in the joining interfaces 311,321 of the blade sections 31,32 (see Fig. 4) to be joined with the joining adapter 2.

Fig. 3 shows a longitudinal sectional view of a shell region of a joining adapter 2 produced with the packing table 1. The shear web and reinforcement beams are not shown.

Fig. 4 shows a longitudinal sectional view of the joining zone 3 between two blade sections 31,32 to be joined. Both the joining interface 311 of the inboard blade section 31 and the joining interface 321 of the outboard blade section 32 comprise outwardly tapering sections that mate with the two tapering ends of the joining adapter 2. The tapering sections of the joining interfaces 311,321 form a recess in that the joining adapter can be arranged. **Fig. 5** shows the joining zone 3 with the joining adapter 2 in place.

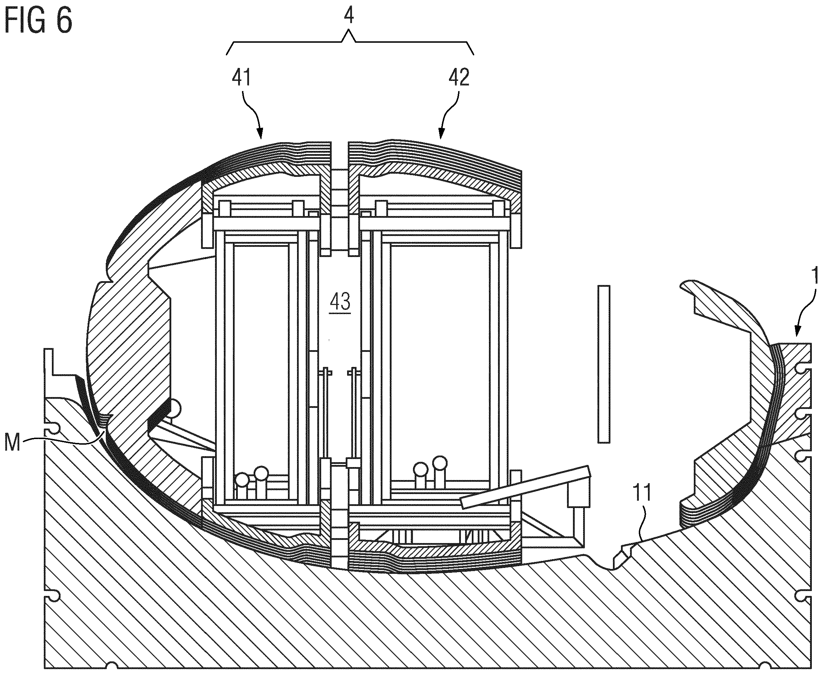

In **Fig. 6** a mandrel tool 4 having two separate mandrels 41, 42 is arranged on the packing table 1. The (lower) material layup to be provided in a material layup gap M between the material layup surface 11 and the mandrel tool 4 is not shown. Both mandrels 41,42 are expandable mandrels and can be expanded in the radial direction by varying at least one dimension in the height and/or width direction. While the lower material layup is provided on the material layup surface 11 of the packing table 1 an upper material layup of the joining adapter 2 is provided on top of the mandrel tool 4. When the mandrel tool 4 is placed on the packing table, i.e. during the lower and upper material layup, the mandrel tool 4 is in its non-expanded condition so that the dimensions of the prepacked joining adapter 2 are smaller than the dimensions of the respective joining interfaces 311, 321 of the blade sections 31,32 to be joined. This facilitates insertion of the joining adapter into the joining interfaces 311, 321 of the blade sections. The mandrel tool 4 is only expanded after it has been moved to its final joining position in the joining zone 3 between the two blade sections 31,32. Between the two mandrels 41,42 a gap 43 is provided in that a material layup for a shear web and/or excess material can be arranged.

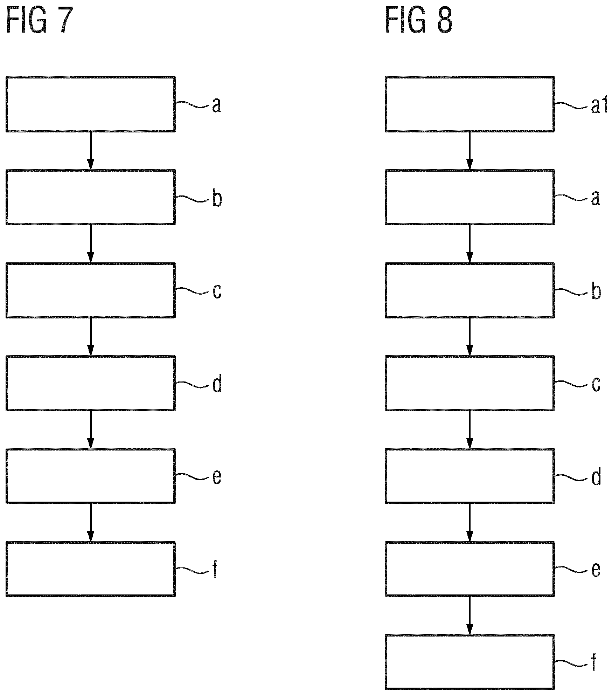

**Fig. 7** shows a flow chart of a first embodiment of the method for manufacturing of a joining adapter 2 to be used in a method for joining an outboard blade section 32 to an inboard blade section 31 of a longitudinally split wind turbine blade in a joining zone 3, using a packing table 1 according to the invention.

The method comprises the following steps:
a) placing a predefined number of fiber mats on the material layup surface 11 of the packing table 1 to create a lower material layup 21;
b) covering the lower material layup 21 with at least one vacuum bag;
c) arranging at least one mandrel 4,41,42 on the packing table (1) on top of the lower material layup 21 covered with the at least one vacuum bag;
d) covering an upper side of the mandrel 4,41,42 with at least one vacuum bag;
e) placing a predefined number of fiber mats on the mandrel 4,41,42 covered with the at least one vacuum bag to create an upper material layup;
f) securing the lower and upper material layup against the mandrel 4,41,42.

Fig. 8 shows a flow chart of a second embodiment of the method for manufacturing of a joining adapter. It comprises a step a1) arranging at least one tensioning strap in the at least one groove 12a,12b,12c of the packing table 1 that is executed before step a) of the method of the first embodiment.

Further, step f) comprises extending the at least one tensioning strap over the upper material layup provided on the mandrel 4,41,42, connecting free ends of the tensioning strap and tensioning the tensioning strap to secure the lower material layup 21 and upper material layup against the mandrel 4,41,42.

Although the present invention has been described in accordance with preferred embodiments, it is obvious for the person skilled in the art that modifications are possible in all embodiments.

## Claims

1. Packing table (1) for manufacturing of a joining adapter (2) to be used in a method for joining an outboard blade section (32) to an inboard blade section (31) of a longitudinally split wind turbine blade in a joining zone (3), the packing table (1) comprising:
- a three dimensionally shaped material layup surface (11) having a shape that corresponds to an inner contour of respective joining interfaces (311,321) of the blade sections (31,32) to be joined,
- a center plane (C) oriented normally with respect to a longitudinal axis (L) of the wind turbine blade, wherein an axial position of the center plane (C) corresponds to a center of the joining zone (3),
- wherein the shape of an inboard portion (111) of the material layup surface (11) corresponds with an inner contour of the joining interface (311) of the inboard blade section (31) and wherein the shape of an outboard portion (112) of the material layup surface (11) corresponds with an inner contour of the joining interface (321) of the outboard blade section (32) .

2. Packing table (1) according to claim 1, wherein the material layup surface (11) comprises at least two tapering sections with the center plane (C) in between, wherein the tapering sections taper axially (L) outwardly from the center plane (C) in opposing axial directions.

3. Packing table (1) according to claim 2, wherein a first tapering section is located in the inboard portion (111) of the material layup surface (11) and a second tapering section is located in the outboard portion (112) of the material layup surface (11).

4. Packing table (1) according to any of the claims 1 - 3, comprising at least one groove (12a,12b,12c) in the material layup surface (11), in particular wherein the at least one groove (11) extends in a circumferential direction, wherein the at least one groove (12a,12b,12c) is adapted to receive a tensioning strap.

5. Packing table (1) according to any of the preceding claims, wherein the packing table (1) comprises a plastic material, in particular a closed cell foam, in particular expanded polystyrene, that provides the three dimensionally shaped material layup surface (11), wherein in particular the plastic material is coated with a relatively harder surface coating, in particular comprising a polyurethane.

6. Packing table (1) according to any of the preceding claims, comprising at least two sidewalls (13a,13b) forming a half-pipe shaped portion of the material layup surface (11), wherein in particular the half-pipe shaped portion of the material layup surface is located both in the inboard portion (111) and the outboard portion (112) of the material layup surface (11) and neighbors the center plane (C).

7. Packing table (1) according to any of the preceding claims, comprising a multitude of plates (14a,14b,14c) stacked in the axial direction (L), wherein each plate (14a,14b,14c) comprises a portion of the material layup surface (11) so that the material layup surface (11) is provided by a totality of the stacked plates (14a,14b,14c).

8. Packing table (1) according to any of the preceding claims, wherein opposing axial end sections (15) of the packing table (1) are sidewall-free.

9. Method for manufacturing of a joining adapter (2) to be used in a method for joining an outboard blade section (32) to an inboard blade section (31) of a longitudinally split wind turbine blade in a joining zone (3), using a packing table (1) according to any of the preceding claims and comprising the steps:
a) placing a predefined number of fiber mats on the material layup surface (11) of the packing table (1) to create a lower material layup (21);
b)covering the lower material layup (21) with at least one vacuum bag;
c) arranging at least one mandrel (4,41,42) on the packing table (1) on top of the lower material layup (21) covered with the at least one vacuum bag;
d) covering an upper side of the mandrel (4,41,42) with at least one vacuum bag;
e) placing a predefined number of fiber mats on the mandrel (4,41,42) covered with the at least one vacuum bag to create an upper material layup;
f) securing the lower and upper material layup against the mandrel (4,41,42).

10. Method according to claim 9, wherein the at least one mandrel (4,41,42) is an expandable mandrel that is expandable at least in the radial direction and wherein the expandable mandrel (4,41,42) is arranged on the packing table (1) in a non-expanded condition in step c).

11. Method according to claim 9 or 10, wherein in step c) two separate mandrels (41,42) are arranged on the packing table, wherein in particular a first mandrel (41) is associated with a leading edge side of the wind turbine blade and a second mandrel (42) is associated with a trailing edge side of the wind turbine blade.

12. Method according to any of the claims 9 - 11, comprising the following steps:
b1) arranging a shear web on the lower material layup (21) and connecting it to the lower material layup (21) with a first web joint, and
e1) connecting the shear web to the upper material layup with a second web joint,
wherein step b1) is in particular executed after step a) and before step b) and wherein step e1) is in particular executed after or during step e) and before step f).

13. Method according to any of the claims 9 - 12,
wherein the lower material layup (21) and/or upper material layup comprises fibers in dry condition and/or the shear web, the first web joint and/or the second web joint comprise fibers in a pre-cast condition.

14. Method according to any of the claims 9 - 13, wherein step a) and/or step e) comprise placing at least one layer of a core material (22) between the fiber mats.

15. Method according to any of the claims 9 - 14,
comprising step a1) arranging at least one tensioning strap in the at least one groove (12a,12b,12c) of the packing table (1),
wherein step f) comprises extending the at least one tensioning strap over the upper material layup provided on the mandrel (4,41,42), connecting free ends of the tensioning strap and tensioning the tensioning strap to secure the lower material layup (21) and upper material layup against the mandrel (4,41,42),
wherein step a1) is executed before step a).
